## Europäisches Patentamt

## European Patent Office

## Office européen des brevets

(19)

(11) Veröffentlichungsnummer: **0 152 964**
**B1**

(12) # EUROPÄISCHE PATENTSCHRIFT

(45) Veröffentlichungstag der Patentschrift:
27.12.89

(21) Anmeldenummer: **85101997.6**

(22) Anmeldetag: **22.02.85**

(51) Int. Cl.⁴: **G 01 N 21/03**

(54) Küvettenanordnung.

(30) Priorität: **23.02.84 CH 896/84**

(43) Veröffentlichungstag der Anmeldung:
**28.08.85 Patentblatt 85/35**

(45) Bekanntmachung des Hinweises auf die Patenterteilung:
**27.12.89 Patentblatt 89/52**

(84) Benannte Vertragsstaaten:
**AT BE CH DE FR GB IT LI LU NL SE**

(56) Entgegenhaltungen:
**EP-A-0 100 663**
**US-A-3 441 383**
**US-A-3 811 780**
**US-A-4 126 418**

(73) Patentinhaber: **F. HOFFMANN- LA ROCHE AG,**
**Postfach 3255, CH- 4002 Basel (CH)**

(72) Erfinder: **Borer, Claude, Ronystrasse 6b, CH- 6331**
**Hünenberg (CH)**
Erfinder: **Greter, Andreas, Guntenbühl 8, CH- 6312**
**Steinhausen (CH)**

(74) Vertreter: **Körber, Wolfhart, Dr., Patentanwälte**
**Dipl.- Ing. H. Mitscherlich Dipl.- Ing. K.**
**Gunschmann Dr.rer.nat. W. Körber Dipl.Ing. J.**
**Schmidt- Evers Dipl.- Ing. W. Melzer**
**Steinsdorfstrasse 10, D-8000 München 22 (DE)**

## Beschreibung

Die Erfindung betrifft eine Küvettenanordnung zur Verwendung in einem chemischen Analysensystem, welche eine in einem Stück ausgeführte Einheit umfaßt, die durch eine Mehrzahl von Zwischenwänden separate Kammern zur Aufnahme von Proben-Reagenz-Gemischen definiert, wobei jede Kammer folgende Elemente besitzt:

- ein offenes und ein geschlossenes Ende,
- eine radial äußere Seitenwand, die eine Außenfläche hat, die in einen ersten Kreisbogen eingepaßt ist,
- eine radial innere Seitenwand, die eine innere Außenfläche hat, die in einen zweiten Kreisbogen eingepaßt ist, der mit dem ersten Kreisbogen konzentrisch ist,
- eine Bodenwand, die sich zwischen der äußeren und der inneren Seitenwand erstreckt und dabei das geschlossene Ende der Kammer bildet, und
- Fenster, die eine verlustarme und verzerrungsfreie Übertragung von Strahlungsenergie durch die Kammer ermöglichen, und die ein Paar flache, zueinander parallele Teile umfassen, die voneinander durch eine bestimmte Strecke getrennt sind, wobei der eine der flachen Teile jedes Paares mit der äußeren Seitenwand und der andere der flachen Teile mit der inneren Seitenwand integriert ist,
- und wobei die Zwischenwände mit den äußeren Seitenwänden, den inneren Seitenwänden und den Bodenwänden der Kammern integriert sind, wobei jede Zwischenwand eine obere Sektion, deren oberster Teil bei dem offenen Ende einer Kammer angeordnet ist, eine erste untere Sektion, die mit der Bodenwand einer ersten Kammer integriert ist, und eine zweite untere Sektion hat, die mit der Bodenwand einer zweiten, benachbarten Kammer integriert ist, wobei die erste und zweite untere Sektion unterhalb ihres gemeinsamen Überganges in die obere Sektion durch einen Luftraum voneinander getrennt sind.

Küvettenanordnungen dieser Art sind beispielsweise in der US-A-3 811 780 beschrieben und in der Form von Einwegküvettenringen bekannt, die zum Beispiel 100 Küvetten umfassen. Derartige Küvettenringe haben folgende Nachteile:

Es ist dem Benutzer oft nicht möglich, alle Küvetten des Küvettenringes innerhalb eines Arbeitszyklus zu benutzen. Dennoch muß er oft den ganzen Küvettenring fortwerfen, weil er Flüssigkeiten oder Flüssigkeitsreste enthält, die möglichst rasch oder spätestens am Ende des Arbeitstages das Analysensystem verlassen müssen. Die Ausnutzungsrate der Küvettenringe wird dadurch vermindert.

Küvettenringe, insbesondere solche, die eine relativ hohe Zahl von Küvetten enthalten und deshalb einen relativ großen Durchmesser haben, neigen dazu, sich zu verziehen. Die dadurch verursachten Deformationen des Küvettenringes beeinträchtigen die Durchführung von optischen Messungen der Küvetteninhalte in einem Analysensystem, weil für solche Messungen eine sehr genaue Positionierung aller Küvetten des Küvettenringes erforderlich ist. Um das Ausmaß solcher Deformationen klein zu halten, ist eine relativ komplexe Formgebung der Küvettenringe sowie eine spezielle Verpackung derselben erforderlich. Dies erhöht die Herstellungskosten der Küvettenringe und ihren Verkaufspreis. Bei der Verwendung der Küvettenringe in einem Analysensystem müssen außerdem darin Mittel vorgesehen werden, die eine genaue Positionierung aller Küvetten auch bei Küvettenringen ermöglichen, die leicht verzogen sind. Dies erhöht die Herstellungskosten des Analysensystems.

Zur Vermeidung dieser Nachteile liegt der Erfindung die Aufgabe zugrunde, die für die Durchführung von optischen Messungen der Küvetteninhalte erforderliche genaue Positionierung der Küvettenanordnung im Analysensystem sicherzustellen.

Diese Aufgabe wird erfindungsgemäß mit einer Küvettenanordnung der im Oberbegriff des Patentanspruches definierten Art dadurch gelöst, daß die Küvettenanordnung einen Küvettenringsektor bildet und Mittel für ihre Positionierung im Analysensystem besitzt, die folgende Teile enthalten:

a)    eine Lippe, die mit den inneren Seitenwänden integriert ist und sich von deren Außenseiten in Richtung zum Kreismittelpunkt erstreckt, und

b)    einen Vorsprung an mindestens einer der Kammern der sich von der Außenseite der Bodenwand entlang der Längsachse der Kammer nach außen erstreckt.

Diese Lösung bietet den Vorteil, daß mit sehr wenig Aufwand eine sehr genaue Positionierung der Küvettenanordnung ermöglicht ist.

Die US-A-3 811 780 wie auch die EP-A-0 100 663 enthalten keinen Hinweis auf die der vorliegenden Erfindung zugrundeliegende Aufgabenstellung. Die EP-A-0 100 663 beschreibt keine Meßküvetten, sondern lediglich Behälter für eine vorübergehende Lagerung von Proben. Bei solchen Behältern ist die Positionierung der Behälteranordnung bei weitem nicht so kritisch wie bei einer Anordnung von Meßküvetten. Aus der gattungsbildenden US-A-3 811 780 ist lediglich die Verwendung einer Lippe bekannt, die zur Positionierung einer ringförmigen Küvettenanordnung dient, die sich aber von der radial äußeren Seitenwand der Küvettenanordnung radial nach außen erstreckt.

Ein Ausführungsbeispiel der Erfindung wird nachstehend anhand der beiliegenden Zeichnungen näher erläutert. Es stellen dar:

Fig. 1 eine perspektivische Ansicht einer erfindungsgemässen Küvettenanordnung,

Fig. 2 eine Draufsicht der Küvettenanordnung in Fig. 1,

Fig. 3 einen Querschnitt längs der Linie A-A in Fig. 2, und

Fig. 4 einen Querschnitt längs der Linie B-B in Fig. 3

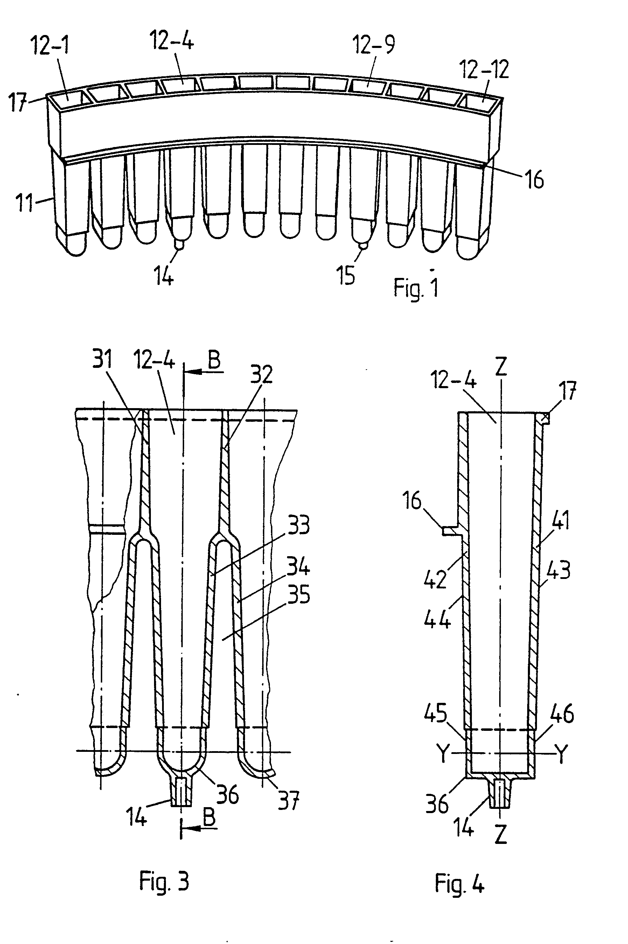

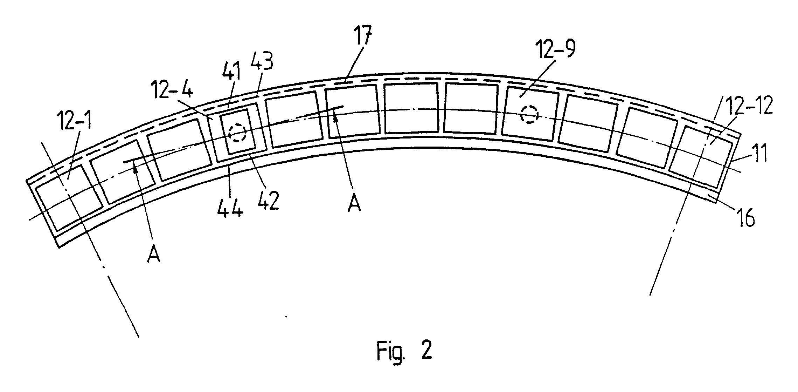

Die in Figuren 1 und 2 dargestellte, erfindungsgemässe Küvettenanordnung bildet ein Küvettenringsegment 11. Dieses wird in einem Stück z. B. aus glasklarem, unstabilisierten Polymethylmetacrylat (PMMA) hergestellt. Das Küvettenringsegment 11 umfasst 12 Kammern, 12 - 1 bis 12 - 12, in welchen 12 voneinander getrennte Proben mit geeigneten Reagenzien gemischt und die Probe-Reagenz-Gemische für ihre optische Analyse gehalten werden können. Wie aus den Figuren 1 und 2 ersichtlich, sind diese Kammern entlang einem Kreisbogen angeordnet. Wie durch die Figuren 1 - 4 gezeigt, besitzt jede dieser Kammern folgende Elemente: ein offenes und ein geschlossenes Ende, eine äussere Seitenwand 41, die eine äussere Kante bildet, die in einen ersten Kreisbogen eingepasst ist, eine innere Seitenwand 42, die eine innere Kante 44 bildet, die in einen zweiten Kreisbogen eingepasst ist, der mit dem ersten Kreisbogen konzentrisch ist, eine Bodenwand 36, die sich zwischen der äusseren und der inneren Seitenwand bei dem geschlossenen Ende der Kammer erstreckt, Fenster, die eine verlustarme und verzerrungsfreie Uebertragung von Strahlungsenergie durch die Kammer ermöglichen, welche Fenster ein Paar flache, zueinander parallele Teile 45, 46 umfassen, die voneinander durch eine bestimmte Strecke getrennt sind, wobei der eine der flachen Teile in jedem Paar mit der äusseren Seitenwand 41 integriert ist und der andere der flachen Teile in jedem Paar mit der inneren Seitenwand 42 integriert ist.

Alle Kammern 12 - 1 bis 12 - 12 haben die gleiche Form und die gleichen Abmessungen. Um eine Grössenordnung für die Abmessungen einer dieser Kammern anzugeben, wird darauf hingewiesen, dass diese z. B. 38 mm hoch ist, und dass der Abstand zwischen der äusseren Kante 43 und der inneren Kante 44 z. B. 6 bis 8 mm beträgt.

Mit 6 Küvettenringsegmente wie dasjenige, das in Fig. 1 dargestellt ist, kann man einen ganzen Küvettenring bilden. Im Rahmen der Erfindung kann jedoch das Küvettenringsegment, gemäss Fig. 1 mehr oder weniger als 12 Kammern umfassen. Je nach Wahl der Anzahl Kammern pro Segment werden dann mehr oder weniger solcher Segmente benötigt, um einen ganzen Küvettenring zu bilden.

Wie in Fig. 3 im Detail gezeigt, enthält die Küvettenanordnung gemäss Fig. 1 eine Mehrzahl Zwischenwände, die mit den äusseren Seitenwänden, den inneren Seitenwänden und den Bodenwänden der Kammern integriert sind, wobei jede Zwischenwand eine obere Sektion 31 bzw. 32, die wenigstens teilweise bei den offenen Enden einer Kammer angeordnet ist, eine erste untere Sektion 33, die mit der Bodenwand 36 einer ersten Kammer integriert ist, und eine zweite untere Sektion 34 hat, die mit der Bodenwand 37 einer zweiten Kammer integriert ist, wobei die erste und zweite untere Sektion durch einen Luftraum 35 getrennt sind.

Das Küvettenringsegment 11 enthält folgende Mittel, die für die Positionierung des Küvettenringsegments im Analysensystem verwendbar sind:

- eine Lippe 16, die mit den inneren Seitenwänden 42 integriert ist, und sich von diesen radial ausserhalb der Kammern erstreckt,
- die Bodenwand 36 mindestens einer der Kammern, z. B. der Kammer 12 - 4, hat einen Vorsprung 14, der sich von der Aussenseite der Bodenwand entlang der Längsachse der Kammer erstreckt.

Durch die in den beiliegenden Figuren gezeigte Ausführung der Lippe 16 und eine dazu passende Führung bzw. Verriegelung im Küvettenträger (in den beiliegenden Figuren nicht gezeigt) des Analysensystems wird sichergestellt, dass wenn die erfindungsgemässe Küvettenanordnung im Analysensystem eingesetzt wird, die Fenster von allen Kammern sich in der richtigen Position, und insbesondere in der richtigen Höhe befinden, die für die Durchführung von optischen Messungen mit der im Analysensystem vorhandenen optischen Messeinrichtungen erforderlich ist. Wie in Fig. 4 gezeigt, durchquert bei einer solchen Messung ein Lichtstrahl entlang der Achse Y-Y z. B. die Fensterteile 45, 46 der Kammer 12 - 4.

Durch den stumpfkegelförmigen Vorsprung 14 und eine entsprechende Führung im Küvettenträger des Analysensystems wird sichergestellt, dass bei Verwendung des Küvettenringsegments 11 im Analysensystem die Längsachse Z-Z jeder Kammer senkrecht zum Lichtstrahl entlang der Achse Y-Y liegt. Der Vorsprung 14 trägt also dazu bei, eine noch genauere Positionierung des Küvettenringsegments im Analysensystem zu erzielen.

Da das Küvettenringsegment in Fig. 1 relativ lang ist, sind dort 2 Vorsprünge 14, 15 bei den Kammern 12 - 4 bzw. 12 - 9 vorgesehen. Bei kürzeren Küvettenringsegmenten ist jedoch ein einziger Vorsprung, z. B. der Vorsprung 14, für die genaue Positionierung des Küvettenringsegments ausreichend. Die Vorsprünge 14 und 15 sind vorzugsweise hohl.

Das Küvettenringsegment 11 enthält ausserdem eine Lippe 17 die mit den äusseren Seitenwänden 41 integriert ist und sich radial nach aussen erstreckt. Diese Lippe erleichtert dem Benutzer die Handhabung des Küvettenringsegments, insbesondere wenn dieses aus dem Analysensystem herausgenommen werden muss.

## Patentansprüche

Küvettenanordnung zur Verwendung in einem chemischen Analysensystem, welche eine in einem Stück ausgeführte Einheit umfaßt, die durch eine Mehrzahl von Zwischenwänden separate Kammern zur Aufnahme von Proben-Reagenz-Gemischen definiert, wobei jede Kammer folgende Elemente besitzt:

- ein offenes und ein geschlossenes Ende,
- eine radial äußere Seitenwand (41), die eine Außenfläche hat, die in einen ersten Kreisbogen eingepaßt ist,
- eine radial innere Seitenwand (42), die eine innere Außenfläche hat, die in einen zweiten Kreisbogen eingepaßt ist, der mit dem ersten Kreisbogen konzentrisch ist,
- eine Bodenwand (36), die sich zwischen der äußeren und der inneren Seitenwand erstreckt und dabei das geschlossene Ende der Kammer bildet, und
- Fenster, die eine verlustarme und verzerrungsfreie Übertragung von Strahlungsenergie durch die Kammer ermöglichen, und die ein Paar flache, zueinander parallele Teile (45, 46) umfassen, die voneinander durch eine bestimmte Strecke getrennt sind, wobei der eine der flachen Teile jedes Paares mit der äußeren Seitenwand (41) und der andere der flachen Teile mit der inneren Seitenwand (42) integriert ist,
- und wobei die Zwischenwände mit den äußeren Seitenwänden (41), den inneren Seitenwänden (42) und den Bodenwänden (36) der Kammern integriert sind, wobei jede Zwischenwand eine obere Sektion (31, 32), deren oberster Teil bei dem offenen Ende einer Kammer angeordnet ist, eine erste untere Sektion (33), die mit der Bodenwand (36) einer ersten Kammer integriert ist, und eine zweite untere Sektion (34) hat, die mit der Bodenwand (37) einer zweiten, benachbarten Kammer integriert ist, wobei die erste und zweite untere Sektion unterhalb ihres gemeinsamen Überganges in die obere Sektion durch einen Luftraum (35) voneinander getrennt sind, dadurch gekennzeichnet, daß die Küvettenanordnung einen Küvettenringsektor (11) bildet und Mittel für ihre Positionierung im Analysensystem besitzt, die folgende Teile enthalten:

a) eine Lippe (16), die mit den inneren Seitenwänden (42) integriert ist und sich von deren Außenseiten in Richtung zum Kreismittelpunkt erstreckt, und
b) einen Vorsprung (14) an mindestens einer der Kammern (12 - 4), der sich von der Außenseite der Bodenwand (36) entlang der Längsachse der Kammer nach außen erstreckt.

## Claims

A cuvette arrangement for use in a chemical analysis system, which comprises an integrally produced unit which, by means of a plurality of partitions, defines separate chambers for the receipt of sample-reagent mixtures, each chamber possessing the following elements:

- an open and a closed end.
- a radially outer side wall (41) which has an outer surface which fits into a first arc.
- a radially inner side wall (42) which has an inner surface which fits into a second arc which is concentric with the first arc,
- a bottom wall (36) which extends between the outer and the inner side wall and which thereby forms the closed end of the chamber, and
- windows which enable radiation energy to be transmitted through the chamber with low loss and free from distortion and which comprise a pair of flat. mutually parallel parts (45, 46) which are separated from one another by a defined distance, one of the flat parts of each pair being integrated with the outer side wall (41) and the other of the flat parts being integrated with the inner side wall (42),
- and the partitions being integrated with the outer side walls (41), the inner side walls (42) and the bottom walls (36) of the chambers, with each partition having an upper section (31, 32) the uppermost part of which is disposed at the open end of a chamber, a first lower section (33) which is integrated with the bottom wall (36) of a first chamber and a second lower section (34) which is integrated with the bottom wall (37) of a second, adjacent chamber, the first and second lower sections being separated from one another by an air space (35) below the position where they merge together into the upper section. characterized in that the cuvette arrangement forms a cuvette ring sector (11) and possesses means for its positioning in an analysis system which comprise the following parts:

a) a lip (16) which is integrated with the inner side walls (42) and which extends from the outsides thereof towards the centre of the circle, and
b) a projection (14) on at least one of the chambers (12-4) which extends outwards from the outside of the bottom wall (36) along the longitudinal axis of the chamber.

## Revendications

Agencement de cuvettes utilisable dans une installation d'analyse chimique, qui comporte une unité réalisée d'une seule pièce et qui définit, à l'aide de plusieurs parois intermédiaires, des chambres séparées servant à recevoir des mélanges d'échantillons et de réactifs, chaque chambre comportant les éléments suivants:

- une extrémité ouverte et une extrémité fermée,
- une paroi latérale radialement extérieure (41), qui comporte une surface extérieure qui est adaptée à un premier arc de cercle,
- une paroi latérale radialement intérieure (42), qui comporte une surface limite intérieure qui est adaptée à un second arc de cercle, qui est concentrique au premier arc de cercle,
- une paroi de fond (36), qui s'étend entre la paroi latérale extérieure et la paroi latérale intérieure et qui constitue ainsi l'extrémité fermée de la chambre, et
- des fenêtres, qui permettent une transmission, exempte de distorsion et avec peu de pertes, d'une énergie de rayonnement au travers de la chambre et qui comportent une paire de parties planes (45, 46), mutuellement parallèles et séparées l'une de l'autre d'une distance déterminée, une des parties planes de chaque paire étant intégrée à la paroi latérale extérieure (41) et l'autre partie plane étant intégrée à la paroi latérale intérieure (42),
- et les parois intermédiaires étant intégrées avec les parois latérales extérieures (41), les parois latérales intérieures (42) et les parois de fond (36) des chambres, chaque paroi intermédiaire comportant une section supérieure (31, 32) dont la partie extrême supérieure est disposée dans l'extrémité ouverte d'une chambre, une première section inférieure (33), qui est intégrée à la paroi de fond (36) d'une première chambre, et une seconde section inférieure (34) qui est intégrée à la paroi de fond (37) d'une seconde chambre adjacente, les première et seconde sections inférieures étant séparées l'une de l'autre, en dessous de leur transition commune dans la section supérieure, par un volume d'air (35),
- caractérisé en ce que l'agencement de cuvettes constitue un secteur annulaire de cuvettes (11) et comporte, pour son positionnement dans l'installation d'analyse, des moyens contenant les parties suivantes:

a) une lèvre (16), qui est intégrée aux parois latérales intérieures (42) et qui s'étend à partir de leurs côtés extérieurs en direction du centre du cercle, et

b) une saillie (14), prévue dans au moins une des chambres (12-4) et qui s'étend vers l'extérieur, à partir du côté extérieur de la paroi de fond (36), le long de l'axe longitudinal des chambres.

Fig. 1

Fig. 3

Fig. 4

Fig. 2